Europäisches Patentamt

European Patent Office

Office européen des brevets

(19)

(11) Publication number: **0 501 158 A1**

## (12) EUROPEAN PATENT APPLICATION

(21) Application number: **92101428.8**

(22) Date of filing: **29.01.92**

(51) Int. Cl.5: **A21C  3/04**, A21C 11/00, A21C 11/16

(30) Priority: **27.02.91 IT 50591**

(43) Date of publication of application:
**02.09.92 Bulletin  92/36**

(84) Designated Contracting States:
**AT BE CH DE DK ES FR GB GR IT LI LU MC NL PT SE**

(71) Applicant: **BARILLA G.E.R. FRATELLI- Società per Azioni**
**Viale Riccardo Barilla, 3/A**

**I-43100 Parma(IT)**

(72) Inventor: **Bertozzi, Fausto**
**Via Duccio Galimberti, 10**
**I-43100 Parma(IT)**

(74) Representative: **Vannini, Torquato et al**
**JACOBACCI-CASETTA & PERANI S.p.A. 7 Via Visconti di Modrone**
**I-20122 Milan(IT)**

(54) Apparatus for forming from a shapeless paste a food intended to be cooked.

(57) Apparatus for forming from a shapeless paste a food product intended to be cooked has an extrusion head (11, 11a) into which the shapeless paste is conveyed and from which a shaped paste is extruded, and also includes a container (12) in which the extruded paste is deposited; the extrusion head (11, 11a) and the container (12) are movable relative to each other in order to shape the food product in the container (12).

FIG.1

EP 0 501 158 A1

The present invention relates to apparatus for forming from a shapeless paste a food product which is intended to be cooked.

It is well known that, for a long time, production of pizza bases on an industrial or semi-industrial scale has entailed the use of vertical presses in which a portion of dough is pressed into a substantially pan-shaped female mould until it assumes the shape thereof. Particular studies and thoughts have been devoted to giving the movable mould of the press such a structure and speed of displacement as to allow the visco-elastic paste to assume the desired form without having any lacerations or discontinuity of material.

The aforementioned technical solution, although substantially satisfying the object of producing pizza bases on an industrial or semi-industrial scale, is not very suitable for working in an appropriate manner a soft paste such as that used for producing bases for the true neapolitan pizza.

In particular, the use of a press means that the paste undergoes considerable mechanical stresses which have a negative effect on the elasticity of the product prior to its being cooked and on the desired friability characteristics.

In addition, there is the drawback of the soft paste sticking to the moulds, a drawback for which a remedy has been sought involving pre-heating of the male and female moulds. Such heating will, however, almost always change the organoleptic characteristics of the end product.

The object of the present invention is apparatus which makes it possible to prepare on an industrial or semi-industrial scale pizza bases having characteristic features similar to those obtained by manual working, overcoming the drawbacks of the currently used press system.

This object is achieved by apparatus for forming from a shapeless paste a food product which is intended to be cooked, characterised in that it comprises an extrusion head into which the shapeless paste is fed and from which a shaped paste is extruded, the apparatus further including a container in which the extruded paste is placed, the extrusion head and the container being adapted for movement relative to each other in order to form the food product in the said container.

So that the characteristic features and advantages of the present invention may be more readily understood there follows a description of a non-limitative example of embodiment which is illustrated in the accompanying drawings in which;

Fig. 1 is a perspective view of apparatus according to the invention,

Fig. 2 is a cross-section through an extrusion head which can be applied to the apparatus in Fig. 1,

Fig. 3 is a cross-section through an alternative extrusion head applied to the apparatus in Fig. 1,

Fig. 4 is a perspective view of the extrusion head in Fig. 3, partly cut away and with some elements shown in an exploded view,

Fig. 5 is a lateral view of the extrusion head in Fig. 3,

Fig. 6 is a view of the extrusion head in Fig. 3 but from above,

Fig. 7 is a view of the extrusion head in Fig. 3 but from below,

Fig. 8 is a front view of the extrusion head in Fig. 3,

Figs. 9 and 10 are perspective views relative to a working cycle of the apparatus in Fig. 1.

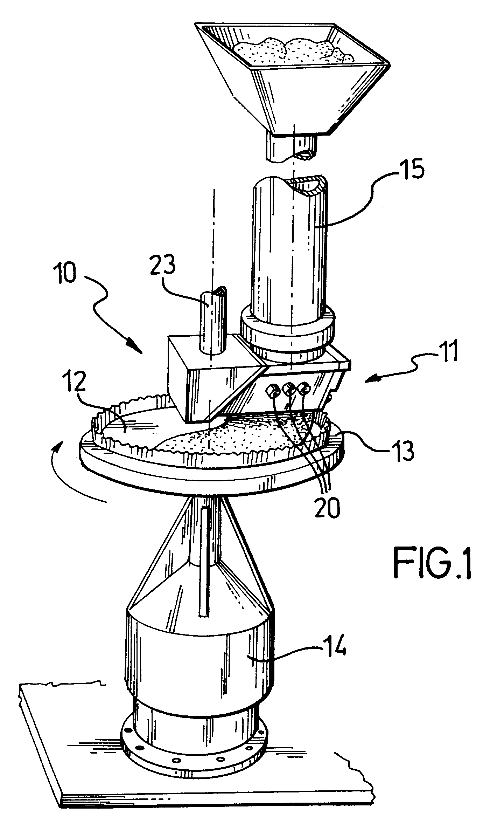

The apparatus in Fig. 1, identified as a whole by the reference numeral 10, is adapted to form from a shapeless paste a food product which is intended to be cooked.

The apparatus 10 comprises an extrusion head 11 into which is fed the shapeless paste of the food product and from which a suitable shaped paste is extruded.

The apparatus 10 further comprises a circular container 12 into which the shaped paste is placed.

The container 12 is mounted on a rotating base 13 which is driven by an electric motor 14.

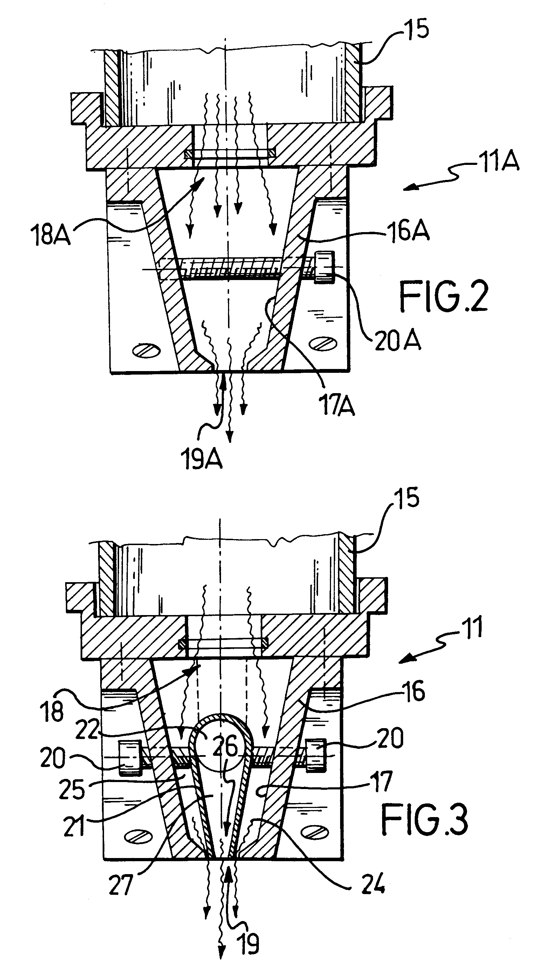

The extrusion head may be simple, such as that illustrated in Fig. 2, or composite, such as that illustrated in Fig. 3.

The extrusion head in Fig. 3 is in fact that shown in Fig. 1 and is therefore indicated as 11; the extrusion head in Fig. 2, being different from that in Fig. 3, is shown as being 11A.

In both cases, a uniform paste is delivered to the extrusion head through a vertical feeder pipe 15.

The extrusion head 11A comprises a body 16A in which there is a cavity 17A forming a passage which connects a mouth 18A and an extrusion aperture 19A of the extrusion head 11A. The mouth 18A communicates with the duct 15. The extrusion aperture 19A is of oblong shape and is intended to be disposed over the container 12.

The cavity 17A gradually narrows in cross-section from the mouth 18A to the extrusion aperture 19A in order to extrude a paste which is shaped into strips.

The cavity 17A is traversed by interception elements consisting of screws 20A which are screwed into the body 16A. The object of such screws 20A is to vary the speed of the paste in the cavity 17A for reasons which will become clear hereinafter.

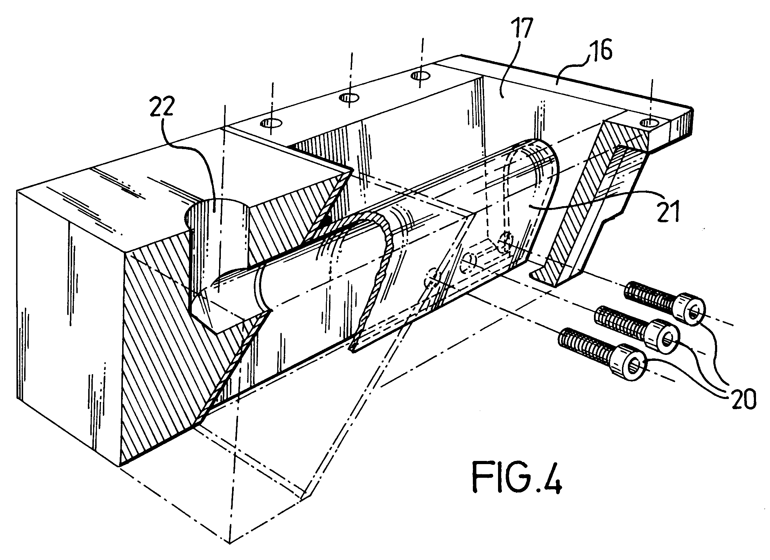

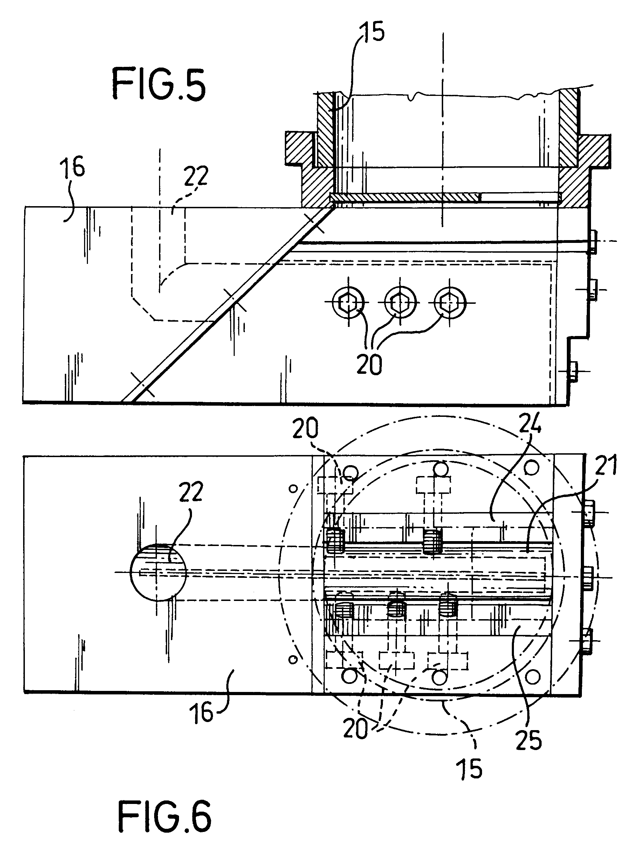

The extrusion head 11 illustrated in detail in Figs. 3, 4, 5, 6, 7 and 8 is however more complex than the former in that it has a plurality of passages which separately from one another convey shapeless pastes to the extrusion aperture of the extrusion head.

In particular, the extrusion head 11 comprises a body 16 in which there is a cavity 17 which connects a mouth 18 and an extrusion aperture 19 of the extrusion head 11. The mouth 18 commnicates with the duct 15. The extrusion aperture 19 is oblong in shape and is disposed above the container 12.

The cavity 17 gradually narrows in cross-section from the mouth 18 to the extrusion aperture 19.

Fixed in the centre of the cavity 17 is a U-shaped passage 21 having arms which converge towards the extrusion aperture 19. Discharging into the passage 21 is a duct 22 connected to a vertical outer duct 23 (Fig. 1), which supplies the extrusion head 11 with a paste of a different type from that supplied by the duct 15.

Thus, there are three distinct passages in the cavity 17, that is, a central passage indicated as 27 which is distinct from the passage 21, and two lateral passages, identified by reference numerals 24 and 25, which are distinct from the inner walls of the cavity 17 and the outer walls of the passage 21.

The passages 24 and 25 are traversed by interception elements constituted by screws 20 which are screwed into the body 16 of the extrusion head 11. The object of such screws 20 is to vary the speed of the paste in the passages 24 and 25 for reasons which will become clearer hereinafter.

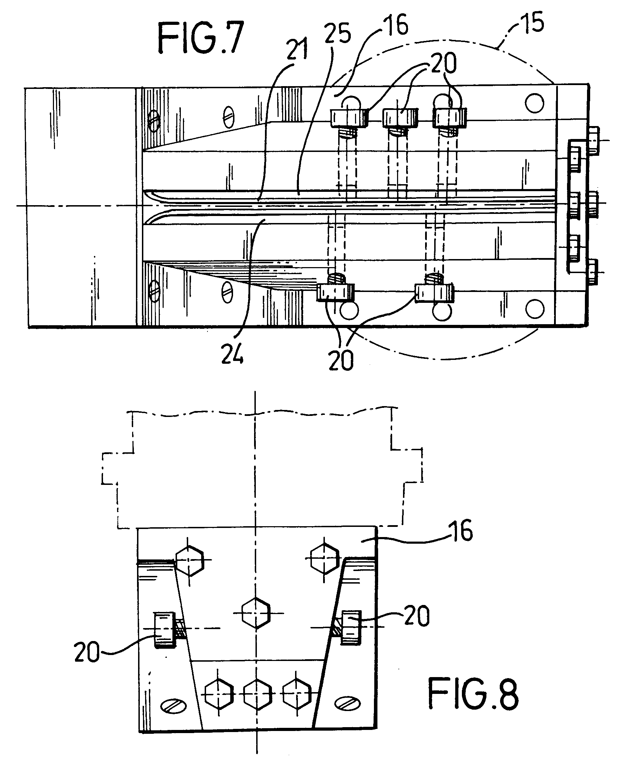

The paste emanating from the duct 15 is divided by the outer walls of the passage 21 into two parts which travel respectively in lateral passages 24 and 25 and combine at the aperture 19. The paste emanating from the duct 22 is guided in turn by the passage 21 towards the aperture 19; in particular, the passage 21 has at the end of its two arms an oblong mouth 26 which extends centrally of the aperture 19, as can be seen clearly in Fig. 7.

In this way, there jointly emerge from the aperture 19 three strips of paste, or two strips of paste of the same type which emerge at the mouth of the lateral passages 24 and 25 and a strip of paste of a different type which emerges from the mouth 26.

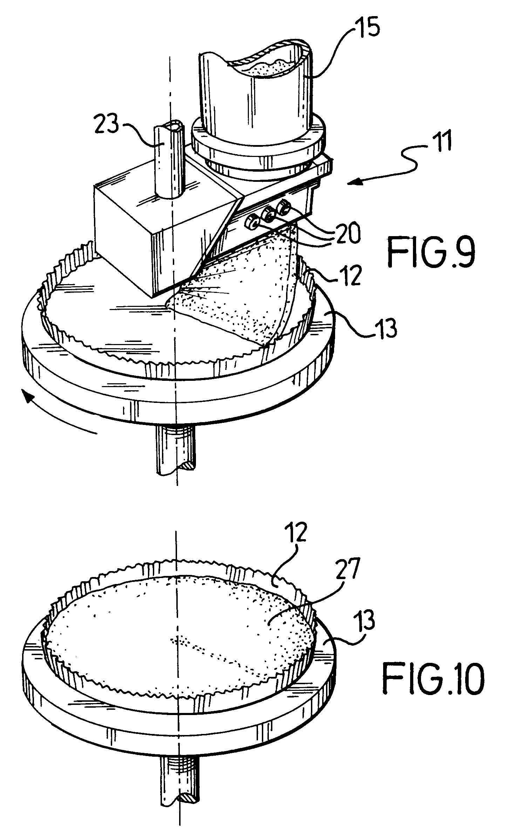

The three strips of paste are placed in the container 12 and, thanks to the rotary movement of the base 13 on which the container 12 rests, form a food product 27 in the shape of a disc, as shown in Figs. 9, 10, consisting of three layers of paste.

It is clear that in the same way by means of the extrusion head 11A a food product is obtained in the form of a disc consisting of a single layer of paste. In this case, by extruding a pizza dough, a pizza base will be obtained.

The disc-shape is obtained by disposing the extrusion aperture in a radial position in relation to the circular path of rotation of the container and rotating the container itself through 360°.

It is also possible to produce an extrusion head with two consecutive oblong aligned apertures disposed dimametrically in respect of the aforesaid circular path of rotation of the container, so that it is possible for the food product to be shaped like a disc with a rotation of just 180° and therefore in half the time compared with the solution which has just a single extrusion aperture.

By means of the extrusion head 11, with a single extrusion, composite food products can be obtained, for example, a filled flan in which the covering paste is supplied through the passages 24 and 25 and the filling paste is supplied through the passage 27.

It is clear that even with the extrusion head 11A it is possible to obtain a composite product by extruding the pastes in successive phases.

By rotating the screws 20 and 20A of the extrusion heads 11 and 11A, it is possible to a greater or lesser degree to obstruct the relative passages, varying the speed of the pastes and therefore their output: a greater obstruction of the passage results in a reduced delivery while a minor obstruction of the passage produces a greater delivery. This may be useful in order to vary the thickness of the paste or of the pastes placed in the container or in order to maintain the same thickness of paste, for example, when the disc-shaped food product is produced in successive phases with concentric drawing operations.

In extrusion, the paste does not suffer substantial mechanical stresses and therefore the apparatus referred to is highly suitable for the preparation of pizza bases in contrast to the press system referred to in the introduction.

Furthermore, in the present apparatus according to the invention, in view of the continuous flow of paste, there are no problems of the paste clinging to the moulds as there is in the press systems.

It is obvious that there may be alternative embodiments and/or additions to what has been described and illustrated.

The inside diameter of the extrusion aperture may be variable so that in consequence it becomes possible to vary the width of the paste strip.

The shape of the extrusion aperture of the extrusion head may vary in order to extrude pasts of various shapes.

The extrusion head may then be interchangeable.

In this way, it is for example possible, once the food product has been shaped into the form of a disc, to change the extrusion head for one which extrudes a paste shaped like a seam which is stretched along the periphery of the food product of disc shape in order to produce an edging.

Thought may be given to performing any kind of relative movement between the extrusion head and the container, for example, it may be the extrusion head which rotates and the container which remains stationary or both may be rotated, one moving in relation to the other. The relative movement between the extrusion head and the container need not necessarily be rotary but may also be translatory or rotatory and translatory.

The food product may thus be delivered into the container in more varied forms.

The paste or pastes may be fed to the extrusion head by a plurality of different means, for example, by means of screw conveyors which are not described nor illustrated here because they are already known.

The structure of the extrusion head may obviously vary according to requirements. As seen, the extrusion head can extrude a single paste or a plurality of pastes jointly through a plurality of passages. The screws may be substituted by equivalent interception means which, in the case where a plurality of passages are provided in the extrusion head, may be disposed in all or in some of the passages.

It must be stressed that the term paste is understood here in the extensive meaning of any fluid food material which is therefore capable of being extruded, with which it is possible to form a food product intended to be cooked.

## Claims

1. Apparatus for forming from a shapeless paste a food product intended to be cooked, characterised in that it comprises an extrusion head (11, 11A) into which the shapeless paste is fed and from which a shaped paste is extruded, the apparatus further including a container (12) in which the extruded paste is placed, the extrusion head (11, 11A) and the container (12) being adapted for movement relative to each other in order to form the food product in the said container (12).

2. Apparatus according to Claim 1, in which the extrusion head (11A) has at least one oblong extrusion aperture (19A) to extrude a paste in strip form.

3. Apparatus according to Claim 2, in which the extrusion head (11A) and the container rotate relative to one another in order to form in the container a disc-shaped food product.

4. Apparatus according to Claim 3, in which the extrusion aperture (19A) is disposed radially in respect of the circular path of rotation of the container.

5. Apparatus according to Claim 2, in which in the extrusion head (11A) there is a passage which connects a mouth (18A) of the extrusion head (11A) with the extrusion aperture (19A), the said passage narrowing in cross-section between the mouth (18A) and the extrusion aperture (19A).

6. Apparatus according to Claim 1, in which there are in the said extrusion head a plurality of passages (24, 25, 27) which separately from one another convey respective shapeless pastes to a common extrusion aperture (19) of the extrusion head (11) for the joint extrusion of a composite paste of predetermined form.

7. Apparatus according to Claim 6, in which the said common extrusion aperture (19) is oblong in shape in order to extrude a composite paste in strip form.

8. Apparatus according to Claim 7, in which the extrusion head (11) and the container (12) rotate in respect of each other in order to form in the container (12) a composite food product in the form of a disc.

9. Apparatus according to Claim 8, in which the extrusion aperture (11) is disposed radially in respect of the circular path of rotation of the container (12).

10. Apparatus according to Claim 7, in which there are in the said extrusion head (11) a central passage (27) and two lateral passages (24, 25), each of the said passages (24, 25, 27) narrowing in cross-section towards the common extrusion aperture (19).

11. Apparatus according to Claim 10, in which the central passage (27) is defined by a U-shaped passage (21) with arms converging towards the extrusion aperture (19), received centrally in a cavity (17) in the extrusion head (11), and in which the lateral passages (24, 25) are distinct from the other walls of the said paassage (21) and from the inner walls of this cavity (17), the said passage (21) being connected to a duct (22) for supplying a paste provided in the extrusion head (11), the said cavity (17) comprising a mouth (18) for the supply of another paste.

12. Apparatus according to Claim 5 or 10, in which, in the passage made in the extrusion head, there are interception elements (20, 20A) adapted to vary the speed of the paste.

13. Apparatus according to Claim 12, in which the said interception elements consist of screws (20, 20A) which are screwed into the extrusion head (11, 11A) and which traverse the passage.

FIG.1

FIG.2

FIG.3

FIG.4

EP 0 501 158 A1

FIG.5

FIG.6

FIG.7

FIG.8

10

FIG.9

FIG.10

European Patent
Office

**EUROPEAN SEARCH REPORT**

Application Number

EP    92 10 1428

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 751 198 (G. TANARA) | 1 | A21C3/04 |
|   | * abstract; figures * | | A21C11/00 |
| Y | | 2-11 | A21C11/16 |
|   | --- | | |
| Y | US-A-3 473 508 (F.U. STEWART) | 2-4,8,9 | |
|   | * abstract; figures * | | |
|   | --- | | |
| Y | US-A-4 643 084 (I. GOMEZ) | 5-7,10, 11 | |
|   | * abstract; figures * | | |
|   | --- | | |
| A | GB-A-1 222 054 (L.M. SANTA CRUZ) | | |
|   | --- | | |
| A | US-A-3 940 226 (A.F.L. VERHOEVEN) | | |
|   | --- | | |
| A | EP-A-0 202 143 (NABISCO BRANDS INC.) | | |
|   | ----- | | |

**TECHNICAL FIELDS SEARCHED (Int. Cl.5)**

A21C

The present search report has been drawn up for all claims

| Place of search | Date of completion of the search | Examiner |
|---|---|---|
| THE HAGUE | 26 MAY 1992 | FRANKS N.M. |

EPO FORM 1503 03.82 (P0401)